(19) **Europäisches Patentamt**

**European Patent Office**

**Office européen des brevets**

(11) Veröffentlichungsnummer: **0 652 434 A2**

## (12) EUROPÄISCHE PATENTANMELDUNG

(21) Anmeldenummer: **94116959.1**

(22) Anmeldetag: **27.10.94**

(51) Int. Cl.6: **G01N 25/18**, G01N 25/00, G01N 25/72

(30) Priorität: **05.11.93 DE 4337840**

(43) Veröffentlichungstag der Anmeldung:
**10.05.95 Patentblatt 95/19**

(84) Benannte Vertragsstaaten:
**AT BE CH DE DK ES FR GB IT LI NL PT SE**

(71) Anmelder: **Degussa Aktiengesellschaft
Weissfrauenstrasse 9
D-60311 Frankfurt (DE)**

(72) Erfinder: **Pletka, Hans-D., Dr.
Im Schwalbengrund 20
D-63579 Freigericht (DE)**
Erfinder: **Reichau, Ulrich
Mainparkstrasse 1043
D-63814 Mainaschaff (DE)**
Erfinder: **Schmidt, Michael
Grünaustrasse 11
D-63457 Hanau (DE)**

(54) **Verfahren zum Prüfen der Wärmedämmwirkung von Körpern, insbesondere von Wärmedämmkörpern.**

(57) Die Qualität von Wärmedämmkörpern wird geprüft, indem man an dem Wärmedämmkörper das thermische Relaxationsverhalten mittels berührungsloser Temperaturmessung bestimmt.

**Anordnung während der Erwärmung**

FIGUR 1

Die Erfindung betrifft ein Verfahren zum Prüfen der Wärmedämmwirkung von Körpern, insbesondere von Wärmedämmkörpern.

Wärmedämmkörper, insbesondere evakuierte Wärmedämmkörper, sind ideale Isoliermaterialien für Kältegeräte. Sie bestehen aus einer gasdichten Umhüllung, die zum Beispiel eine Fällungskieselsäure, wie FK 500 LS der Degussa AG, als Füllstoff enthält. Der gesamte Wärmedämmkörper ist auf einen definierten Innendruck evakuiert, um die Isolierwirkung zu erhöhen. Die als Füllstoff enthaltende Fällungskieselsäure weist, um eine gute Isolierwirkung über einen langen Zeitraum zu gewährleisten, einen definierten Wassergehalt auf (EP-B 0 396 696). Derartige Wärmedämmkörper werden beispielsweise hergestellt, indem man

a) einen feinverteilten, pulverförmigen bzw. faserförmigen Stoff, der eine Wasseraufnahmekapazität von 4 bis 50 Gew.-% (bei 23 °C und 85 % relativer Feuchte) aufweist, bereitstellt und gegebenenfalls unter Bedingungen, die für ein Austreiben des Oberflächenwassers ausreichen, trocknet,

b) den pulverförmigen bzw. faserförmigen Stoff gegebenenfalls verpreßt,

c) den gegebenenfalls getrockneten und gegebenenfalls verpreßten pulverförmigen bzw. faserförmigen Stoff in eine Umhüllung, die eine Öffnung zum Evakuieren und eine Wasserdampfdurchlässigkeit von 0,1 bis 0,5 g/(m²•d) (bei 23 °C und 85 % relativer Feuchte) und Gasdurchlässigkeiten von 0,1 bis 0,5 cm³/-(m²•d•bar) (bei 23 °C) aufweist, einbringt,

d) die Umhüllung evakuiert und

e) die Evakuierungsöffnung der Umhüllung unter Erhalt des Vakuums im Innern der Umhüllung verschließt (EP-B 0 396 961).

Bei der großtechnischen Produktion einer größeren Anzahl dieser Wärmedämmformkörper stellt sich das Problem der rationellen zerstörungsfreien Qualitätskontrolle, die eine zuverlässige Aussage über die Qualität der Wärmedämmung des einzelnen Wärmedämmkörpers geben kann.

Es ist bekannt, die Wärmedämmwirkung von evakuierten Wärmedämmkörpern zu bestimmen, indem man den Wärmedämmkörper in eine evakuierte Kammer einbringt und dort untersucht. Das bekannte Verfahren hat den Nachteil, daß es für den großtechnischen Einsatz zu umständlich und zu aufwendig ist (D. Buettner et al. High Temp.- High Pressures, 15(2), 233 - 40 (1983)).

Untersuchungen an Wärmedämmkörpern zeigen den Einfluß des Innendrucks und der relativen Feuchte auf die Wärmeleitzahl. Dabei wird die Wärmeleitzahl im Zustand des stationären Wärmestroms nach mehr als 12 Stunden Verharrungszeit und bei einem Temperaturgradienten von 20 °C bis -20 °C über den Wärmestrom bestimmt. Typische Meßzeiten müssen unter stationären Temperaturbedingungen (konstanter Wärmestrom in dem Wärmedämmformkörper) für Wärmedämmformkörper bei etwa 2 bis 3 Stunden liegen. Dieser Zeitaufwand ist für eine Qualitätskontrolle parallel zur großtechnischen Fertigung zu hoch.

Gegenstand der Erfindung ist ein Verfahren zum Prüfen der Wärmedämmwirkung von Körpern, insbesondere von Wärmedämmkörpern, welches dadurch gekennzeichnet ist, daß man an den Körpern, insbesondere den Wärmedämmkörpern das thermische Relaxationsverhalten mittels berührungsloser Temperaturmessung bestimmt.

Das erfindungsgemäße Prüfverfahren beruht auf den folgenden physikalischen Überlegungen, wobei die verwendeten Formelzeichen die folgende Bedeutung haben:

| A | Fläche | $m^2$ |
|---|---|---|
| b | Wärmeeindringzahl | $J.m^{-2}.K^{-1}.s^{-1/2}$ |
| a | Temperaturleitzahl | $m^2.s^{-1}$ |
| c | spezifische Wärmekapazität | $J.kg^{-1}.K^{-1}$ |
| λ | Wärmeleitzahl | $W.m^{-1}.K^{-1}$ |
| p | Dichte | $kg.m^{-3}$ |
| t | Zeit | s |
| x | Ort | m |

Die Differentialgleichung der Wärmeleitung im eindimensionalen Fall für kartesische Koordinaten lautet:

$$(1) \qquad \frac{\partial \theta}{\partial t} = \frac{\lambda}{\rho \cdot c} \cdot \frac{\partial^2 \theta}{\partial x^2}$$

mit

2

$$a = \frac{\lambda}{\rho \cdot c}$$

Sie beschreibt das Verhalten von zeitlich veränderlichen Temperaturfeldern ohne innere Wärmequellen.

Für das Modell des einseitig "unendlich" ausgedehnten Körpers folgt im einfachen Fall der zur Erwärmung des Körpers konstant hoch gehaltenen Oberflächentemperatur die partikuläre Lösung:

$$(2) \qquad \Theta = \Delta \Theta_0 \frac{2}{\sqrt{\pi}} \cdot \int\limits_{\eta = 0}^{\eta = \frac{x}{\sqrt{4at}}} e^{-\eta^2} d\eta$$

mit der Größe

$\Delta\theta_0 = $ Oberflächentemperatur minus Innentemperatur

Die Lösung für das Temperaturfeld im Körper erhält man über eine Anlalogiebetrachtung zum Gaußschen Wahrscheinlichkeitsintegral.

Für die Berechnung des Wärmestromes durch die Oberfläche folgt mit der Bedingung

$$(3) \qquad \frac{dQ}{dt} = -\lambda \left| \frac{d\theta}{dx} \right|_{x=0} dA$$

mit

$$(4) \qquad \frac{d\theta}{dx} = \Delta \theta_0 \cdot \frac{2}{\sqrt{4\pi at}} \, e^{-\frac{x^2}{4at}}$$

Daraus folgt für die Oberfläche (x = o)

$$(5) \qquad \frac{dQ}{dt} = \sqrt{\frac{\lambda \rho c}{\pi} \frac{1}{t}} \cdot \Delta \theta_0 \cdot A$$

Integration des Ausdrucks über den Zeitraum der Erwärmung liefert die dem Körper zugeführte Wärmemenge

$$(6) \qquad Q = \frac{2}{\sqrt{\pi}} \sqrt{\lambda \rho c} \cdot \Delta\theta_o \cdot A \cdot \sqrt{t}$$

Die Berechnung der Wärmestromdichte und der gespeicherten Wärmemenge in einem Wärmedämmkörper bei 30 °C Temperaturdifferenz zwischen Oberfläche und Formkörpermitte kann beispielsweise unter Verwendung der folgenden Vorgabewerte wie folgt erfolgen:

$\lambda_1 = 0,007$ W.m$^{-1}$.K$^{-1}$, $\rho = 180$ kg.m$^{-3}$ ; c = 1200 J.kg$^{-1}$.K$^{-1}$ ; $\Delta\theta_o = 30$ °C

Aus den Werten folgt die Wärmeeindringzahl

$b_1 = \sqrt{\lambda \rho c} = 38,88$ J.m$^{-2}$.K$^{-1}$.s$^{-\frac{1}{2}}$

und mit $\lambda_2 = 0,020$ W.m$^{-1}$.K$^{-1}$

die Wärmeeindringzahl $b_2 = 65,72$ J.m$^{-2}$.K$^{-1}$.s$^{-\frac{1}{2}}$

Die Ergebnisse der Rechnung sind in der nachfolgenden Tabelle aufgeführt:

| Zeit Sekunden | Wärmestromdichte 1 W.m$^{-2}$ | Wärmestromdichte 2 W.m$^{-2}$ | Wärmemenge 1 J.m$^{-2}$ | Wärmemenge 2 J.m$^{-2}$ |
|---|---|---|---|---|
| 1 | 658 | 1112 | 1316 | 2225 |
| 5 | 294 | 497 | 2943 | 4975 |
| 10 | 208 | 352 | 4162 | 7035 |
| 20 | 147 | 249 | 5886 | 9949 |
| 30 | 120 | 203 | 7209 | 12 185 |
| 50 | 93 | 157 | 9307 | 15 731 |

Wie aus den Werten für die Wärmestromdichte zu erkennen ist, kann in den ersten Sekunden ein erheblicher Wärmestrom in den Wärmedämmkörper eindringen. Die zugeführten Wärmemengen werden aufgrund der Wärmespeicherfähigkeit des Wärmedämmkörpers den Temperaturverlauf während der Abkühlung wesentlich beeinflussen.

Zur Erläuterung der grundlegenden Zusammenhänge kann das einfache Modell eines einseitig "unendlich" ausgedehnten Körpers herangezogen werden. Diese Näherung ist bei dem erfindungsgemäßen Verfahren gut erfüllt, da die kurzen Erwärmungsvorgänge das Eindringen der Wärme auf die Hälfte der Dicke des Wärmedämmkörpers beschränken. Simulationsrechnungen mit zusätzlichen Randbedingungen (Wärmeübergang an der Grenzfläche, freie Konvektion bei der Abkühlung) bestätigen dies. Als weitere Randbedingung soll der Wärmestrom durch die Oberfläche des Prüfkörpers bei Erwärmung als konstant hoch angesehen werden.

Während des Erwärmungsvorganges wird dem Körper die Wärmemenge (Q) gemäß Gleichung (6) zugeführt. Als variabler Parameter der Gleichung (6) gilt unter reproduzierbaren Versuchsbedingungen ($\Delta\theta_o$;A;$\Delta$t konst.) nur die Wärmeeindringzahl (b). Das Temperaturfeld in der Flächennormalen in den Wärmedämmkörper hinein wird, ohne Berücksichtigung der Grenzflächen, von der allgemeinen Differentialgleichung (1) beschrieben. Bei reproduzierbaren Versuchsbedingungen wird das Temperaturfeld im Inneren des Wärmedämmkörpers direkt durch die Änderung der Temperaturleitzahl (a) bestimmt.

Zum Nachweis veränderter Kennwerte (Temperaturleitzahl und Wärmeeindringzahl) bei Wärmedämmkörpern wird im Prüfverfahren dem Formkörper über einen definierten Zeitraum eine bestimmte Wärmemenge zugeführt. Hierbei bestimmt der Wärmestrom durch die Oberfläche den Temperaturverlauf an der Oberfläche (Wärmestau). Wie die Rechnung zur obigen Tabelle zeigt, ist der Wärmestrom in den Wärmedämmkörper, bei konstant hoher Oberflächentemperatur, umgekehrt proportional zu $\sqrt{t}$. Solange die bei den Prüfbedingungen vorliegende Randbedingung des annähernd konstanten Wärmestroms von der Wärmequelle zu dem Wärmedämmkörper erfüllt ist, muß die Oberflächentemperatur in erster Näherung proportional zu $\sqrt{t}$ ansteigen. Unterschiede in der Wärmeeindringzahl (b) sollten sich daher umgekehrt proportional auf die erreichbare Oberflächentemperatur am Ende des Erwärmungsvorgangs auswirken, womit sich ein Meßkriterium für Abweichungen von der Qualitäts-Soll-Vorgabe ergibt.

Bei dem erfindungsgemäßen Verfahren wird nach Beendigung der Wärmezufuhr der Abkühlungsvorgang der Oberfläche bei freier Konvektion gemessen. Der Verlauf dieser Meßwerte kann mit sehr guter

EP 0 652 434 A2

Näherung durch eine Exponentialfunktion vom Typ der Gleichung

(7)     $\theta(t) = \theta_u + \theta_o \cdot \exp(k \cdot t)$

mit den Parametern

$\theta_u$ =     untere Grenztemperatur bei $t = \Rightarrow \infty$

$\theta_o$ =     Temperaturdifferenz $\theta(t=0) - \theta_u$ nach Erwärmung auf $\theta(t=0)$

k =     Abklingkonstante

beschrieben werden. Diese Funktionsparameter werden aus dem Meßwerteverlauf berechnet und sind von den Testbedingungen sowie den Eigenschaften des Wärmedämmkörpers abhängig. Die in den Wärmedämmformkörper eingedrungene Wärmemenge bestimmt im wesentlichen die Temperaturdifferenz ($\theta_o$), während die Abklingkonstante (k) und die untere Grenztemperatur ($\theta_u$) auch durch den Versuchsaufbau und die Durchführung bestimmt werden.

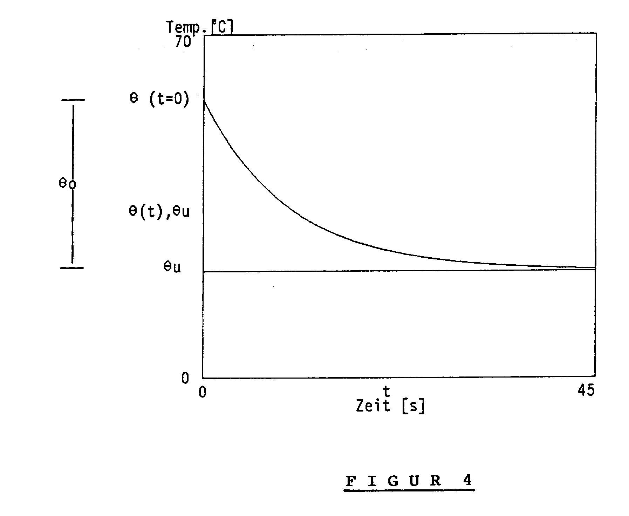

Die Berechnung der Abkühlkurven aus Meßdaten wird im folgenden anhand einer Beispielrechnung dargestellt. Dazu wird eine Abkühlungskurve vorgegeben, die den Erfahrungswerten der Praxis entspricht (siehe auch Figur 4). Die dazu benötigten Parameter sind:

$\theta_u :=$     22 °C Umgebungstemperatur

$\theta_o :=$     35 °C Temperaturdifferenz nach Erwärmen

k :=     -0,1 Abkühlkonstante

Laufzeit des Abkühlungsvorgans t in Sekunden

t :=     0 bis 45 s in Schritten zu 0,1 s

Die Temperaturmeßwerte der Abkühlung, die zur Berechnung der Kurvenparameter nötig sind, betragen zu den Zeitpunkten $t_1$ und $t_2$

$t_1 := 1$ s $t_2 := 20$ s $\theta(t_1) = 53.669$ °C $\theta(t_2) = 26.737$ °C

Die Gleichungen zu diesen Zeitpunkten lauten:

(7.1)     $\theta(t_1) = \theta_u + \theta_o \exp(k\, t_1)$

(7.2)     $\theta(t_2) = \theta_u + \theta_o \exp(k\, t_2)$

Hieraus folgt über Differenzbildung (7.1 - 7.2) Gleichung (7.3)

(7.3)     $\theta(t_1) - \theta(t_2) = \theta_o \{ \exp(k\, t_1) - \exp(k\, t_2) \}$

Durch Division der beiden Gleichungen 7.1 und 7.2 läßt sich die Abkühlkonstante k berechnen (Gleichung 7.4).

$$(7.4) \qquad k = \frac{1}{t_1 - t_2}\, \ln\left[\frac{\theta(t_1) - \theta_u}{\theta(t_2) - \theta_u}\right] \qquad \underline{k = -0,1}$$

Und somit folgt die Erwärmungstemperatur $\theta_o$ aus 7.3.

$$(7.5) \qquad \theta_o = \frac{\theta(t_1) - \theta(t_2)}{\exp(k \cdot t_1) - \exp(k \cdot t_2)} \qquad \underline{\theta_o = 35\ °C}$$

Erfindungsgemäß werden Messungen mit instationären Temperaturbedingungen (Wärmestrom in dem Wärmedämmkörper nicht konstant) durchgeführt. Zur Klärung der Nachweisbarkeit und der Größenordnung von vom Innendruck abhängender Meßwertänderungen wurden an 4 Wärmedämmkörpern, zwei mit weniger als 2 mbar Innendruck und zwei mit circa 70 mbar Innendruck, Testmessungen mittels Thermografie durchgeführt. Bei diesen Messungen erfolgte die Erwärmung der Wärmedämmkörper durch Glühlampen mit einer Gesamtleistung von 400 W. Der Aufbau stand frei im Labor. Die Lampen sowie der Wärmedämmkörper wurden durch Stative gehalten. Mit diesem einfachen Aufbau waren bereits Unterschiede in der

5

durch die Erwärmung erzielbaren Oberflächentemperaturen von etwa 2 °C zwischen den Wärmedämmkörpern mit hohem Innendruck und denen mit niedrigem Innendruck nachzuweisen.

Eine Energiezufuhr über Wärmestrahlung hat gegenüber anderen verwendbaren Methoden wesentliche Vorteile. Durch die Anpassung des Wellenlängenbereichs der Strahlungsquelle kann die Energiezufuhr entweder direkt auf die Oberfläche der Umhüllung, die gegebenenfalls eine Folie sein kann, oder zum größeren Teil durch die Umhüllung hindurch auf die nachfolgenden Gestaltungselemente der Wärmedämmkörper erfolgen. So weist die beispielhaft verwendete Umhüllung im Wellenlängenbereich von 3,5 - 6 $\mu$m eine Transparenz von mehr als 55 % auf. Durch eine gerichtete Wärmezufuhr kann die Temperaturverteilung auf der Oberfläche des Wärmedämmkörpers reproduzierbar erzeugt werden. Dadurch werden die nicht erfaßbaren Wärmeströme an der Wärmedämmkörperoberfläche für jede Messung annähernd gleich und verlieren ihren Einfluß auf relative Bewertungen.

Eine Wärmestrahlungsquelle (im folgenden Strahler genannt) liefert für die Dauer der Erwärmung einen relativ konstanten reproduzierbaren Wärmestrom, was für die Klassifizierung der Wärmedämmkörper notwendig ist. Durch Ein- und Ausblenden des Strahlers läßt sich der Beginn und der Zeitraum der Wärmezufuhr sehr gut definieren.

Die Anforderungen, ohne Temperaturfeldbeeinträchtigung mit hoher zeitlicher Auflösung möglichst genaue Temperaturen zu erfassen, können nur berührungslos mit einem an die Meßbedingungen angepaßten Pyrometer erfüllt werden. Zur Oberflächenmessung (das heißt, auf der Umhüllung) kann ein Wellenlängenbereich von 7 - 20 $\mu$m ausgewählt werden, in dem die Eigenstrahlung der Folie bei mehr als 90 % liegt.

Der während der Aufheizphase auf die Prüflingsoberfläche ausgerichtete Strahler muß während der nachfolgenden Messung in eine Stellung gebracht werden, in der er, von der Meßfläche abgewendet, den Meßvorgang nicht beeinflußt. Die Position des Pyrometers während der Messung wird durch die physikalischen Randbedingungen (Meßfleckdurchmesser, Strahlungswinkel, Temperaturfeld) vorgegeben. Optimale Bedingungen ergeben sich dann, wenn das Pyrometer die Position des Strahlers, das ist senkrecht zur Oberfläche, einnimmt. Der Umschaltvorgang zwischen Erwärmung und Messung sollte möglichst rasch erfolgen und die Geräte nicht belasten. Zur Gewährleistung einer ausreichend genauen Reproduktion der Meßposition ist eine Fixierung bei jedem Umschaltvorgang notwendig. Für den Handbetrieb ist eine einfache Bedienung anzustreben. Durch die Montage von Strahler und Pyrometer, um 90 ° gegeneinander versetzt, auf einer drehbaren Achse mit justierbarer Raststellung, sind die o. e. Bedingungen weitestgehend erfüllt.

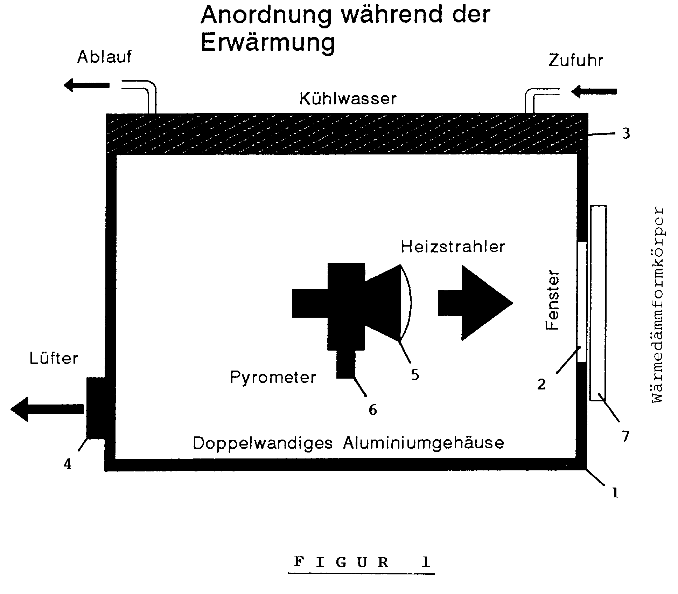

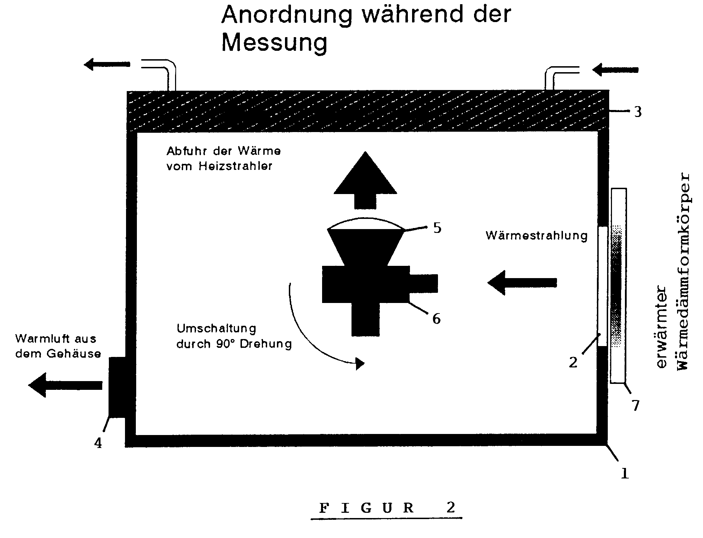

Zur Durchführung der Bestimmung der thermischen Relaxation kann eine Vorrichtung, die schematisch in den Figuren 1 und 2 dargestellt ist, verwendet werden.

Gemäß Figur 1 ist das Gehäuse 1 an einer Seite mit einem Fenster 2, an der oberen Seite mit einer Kühlung 3, die mit Kühlwasser temperiert wird, und einer Lüfteröffnung 4 versehen. In dem Gehäuse befindet sich der Strahler 5 und ein Pyrometer 6, die senkrecht zueinander und als feste Einheit drehbar angeordnet sind. Auf der Außenseite des Fensters 2 wird vor der Messung der Wärmedämmkörper 7 aufgebracht. Mittels des Strahlers 5 und der definierten Öffnung des Fensters 2 wird dem Wärmedämmkörper 7 über einen bestimmten Zeitraum eine definierte Wärmemenge durch Bestrahlen zugeführt. Nach der Bestrahlung wird der Strahler 5 sofort mit dem Pyrometer 6 um 90 ° gedreht, sodaß das Pyrometer 6 die Wärmestrahlungsleistung messen kann (Figur 2). Die Prüfung des Wärmedämmkörpers erfolgt, indem der Rechner eine vorgegebene thermische Abklingkurve mit der gemessenen Abklingkurve vergleicht.

Die Prüfung eines Wärmedämmkörpers kann im einzelnen wie folgt durchgeführt werden, wobei die folgenden technischen Bedingungen eingehalten werden:

Das Meßsignal des Pyrometers wird über eine Analog/Digital-Wandlerkarte in einen Rechner (PC) eingelesen. Die Darstellung der Meßwerte, die Dokumentation und die Auswertung erfolgt über das Programm.

6

| Pyrometer: | Wellenlängenbereich: | 8 - 20 $\mu$m |
| | Meßfleckdurchmesser: | 20 ± 5 mm |
| | zeitliche Auflösung: | 100 ms |
| | Temperaturauflösung: | 0,2 °C |
| | Ausgangssignal: | 0-20 mA bei 0-100 °C |
| A/D-Wandler: | Auflösung: | 12 Bit |
| | Kanalanzahl: | 16 |
| | Wandlerrate: | < 1 ms |
| Strahler: | Leistung: | 60 W |
| | Temperatur: | 320 ± 60 °C |
| | Emissionsgrad: | 98 % |
| | $\lambda_{max}$: | 4,87 $\mu$m |
| Systemdaten: 1) | Lufterwärmung (60 Watt): | 2,0 °C |
| | Hintergrundstrahlung (60 Watt): | 18 ± 2 °C |
| | Vorwärmzeit: | 30 Minuten |

[1] gemessen bei vertikaler Orientierung des Meßfensters im stationären Zustand.

Das Prüfsystem ist mindestens 30 Minuten vor der ersten Prüfung einzuschalten. Hierzu muß zunächst die Wasserversorgung der Kühlfläche 3 geöffnet werden. Sodann wird die Stromversorgung für das Pyrometer 6, der Strahler 5 und der Lüfter 4, eingeschaltet. Nach einer Laufzeit von 30 Minuten ist das Prüfsystem thermisch so stabil, daß man mit den Prüfungen beginnen kann. Für die rechnerunterstützte Prüfung ist der Meßrechner in Betrieb zu nehmen und das Prüfprogramm zu starten.

Vor der Installation des Wärmedämmkörpers wird die Temperatur im Meßraum mit dem Pyrometer 6 gemessen. Dazu muß der Strahler 5 auf das freie Fenster ausgerichtet sein. Nachfolgend wird das Pyrometer auf das freie Fenster ausgerichtet. Nun kann der Wärmedämmkörper vor das Fenster gebracht werden. Es folgt die Messung der Anfangstemperatur des Wärmedämmkörpers mit dem Pyrometer. Dann wird der Strahler 5 auf die Oberfläche des Wärmedämmkörpers ausgerichtet. Der Erwärmungsvorgang beginnt. Nach 45 Sekunden wird wieder das Pyrometer 6 auf die Oberfläche des Wärmedämmkörpers umgeschwenkt und der Temperaturverlauf für ca. 50 Sekunden gemessen. Danach ist der Prüfvorgang beendet und der Wärmedämmkörper kann entfernt werden. Bei der rechnerunterstützten Prüfung erfolgt die Auswertung automatisch am Ende der Prüfung.

Ausgehend von dem bereits beschriebenen Iterationsverfahren lassen sich drei Bewertungsgrößen, die im Vergleich betrachtet eine Beurteilung der Prüflingsqualität gestattet, definieren. Diese Größen sind:

1. Betrag des Exponenten |k| [zu großer Betrag = Ausschuß]
2. Erwärmung $\Delta T_1$ [zu geringe Erwärmung = Ausschuß]
3. Abkühlung $\Delta T_2$ [zu geringe Abkühlung = Ausschuß]

und werden durch die Iterationsgleichung wie folgt definiert:

1.

$$|k| = \frac{1}{t} \cdot \ln \frac{T(t) - T_U}{T_0}$$

t = Zeit

2. $\Delta T_1 = T(t=0) - T_{Anfg}$

T(t=0) = höchste Temp. des Wärmedämmkörpers
$T_{Anfg}$ = Temperatur vor der Erwärm.

3. $\Delta T_2 = T(t=0) - T(t=\infty)$

T(t=∞) = Temperatur, auf die der Wärmedämmkörper abkühlt

7

Zur Eichung des Prüfsystems sind fünf durch andere (absolute) Prüfverfahren ausgewiesene, gute Referenzproben, mindestens 4 mal zu messen. Als Toleranzbereich für die Prüfung gilt der Wertebereich des aus diesen 20 Messungen der Referenzproben gebildeten maximalen absoluten Fehlers (DIN 1319, Bl. 3), der auf einen Vertrauensbereich von 99 % bezogen wird. Aus dem größten Wert des Bereiches der Erwärmung folgt der obere Grenzwert der Erwärmung ($\Delta T_1$ max.), aus dem kleinsten Wert des Bereiches der Erwärmung folgt der untere Grenzwert der Erwärmung ($\Delta T_1$ min.)

Auf gleiche Weise werden die anderen Grenzwertdefinitionen festgelegt. Es folgen somit

1. $\Delta T_{1(max/min)}$ oberer/unterer Grenzwert der Erwärmung

2. $\Delta T_{2(max/min)}$ oberer/unterer Grenzwert der Abkühlung

3. $|k|_{(max/min)}$ oberer/unterer Grenzwert für den Betrag des Exponenten

Zur Beurteilung der Versuchsdurchführung kann bei der beschriebenen Prüfplatzkonfiguration die Wertekombination aus Erwärmung und Exponent herangezogen werden. Die Fallunterscheidung ist nachfolgend aufgeführt.

Meßwerte des Prüflings: $\quad \Delta T_{1(p)}; \Delta T_{2(p)}; |k|_{(p)}$

1. Fall

Ergebnis der Messung: $\quad \Delta T_{1(max)} > \Delta T_{1(p)} > \Delta T_{1(min)}$

$\Delta T_{2(max)} > \Delta T_{2(p)} > \Delta T_{2(min)}$

$|k|_{(max)} > |k|_{(p)} < |k|_{(min)}$

Daraus folgt, daß der Wärmedämmkörper in der Spezifikation ist.

2. Fall

Ergebnis der Messung: $\quad \Delta T_{1(max)} < \Delta T_{1(p)}$

$\Delta T_{2(max)} < \Delta T_{2(p)}$

$|k|_{(max)} > |k|_{(p)} < |k|_{(min)}$

Daraus folgt, daß der Wärmedämmkörper wahrscheinlich in der Spezifikation liegt, aber für eine sichere Bewertung zu lange erwärmt wurde. Die Messung ist ungültig und muß wiederholt werden.

3. Fall

Ergebnis der Messung: $\quad \Delta T_{1(p)} < \Delta T_{1(min)}$

$\Delta T_{2(p)} < \Delta T_{2(min)}$

$|k|_{(max)} < |k|_{(p)}$

Daraus folgt, daß dieser Wärmedämmkörper eindeutig außerhalb der Spezifikation liegt.

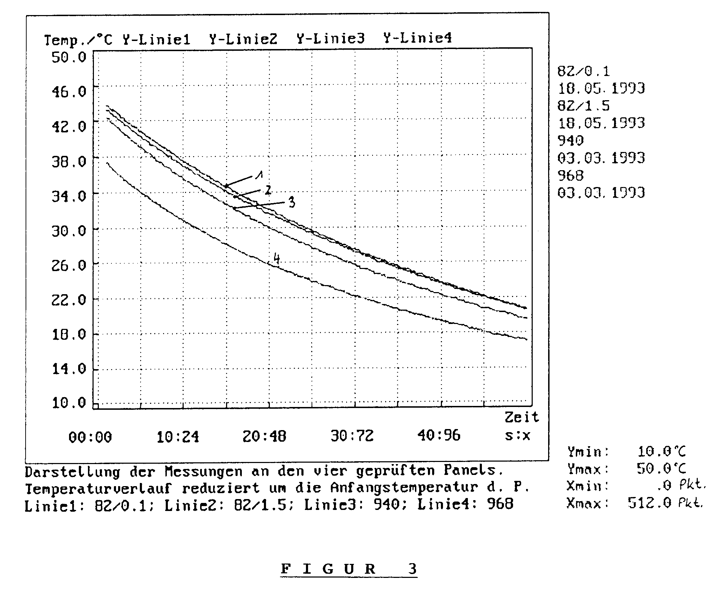

Im nachfolgenden sind Prüfungsmessungen dargestellt, die den beschriebenen Fällen 1 und 3 entsprechen. Dabei zeigen die Meßprotokolle 1 und 2 der Wärmedämmkörper 82/0.1 und 82/1.5 Daten, die von fehlerfreien Wärmedämmkörpern erreicht werden. Als fehlerfrei gelten Wärmedämmkörper mit einer relativen Feuchte von 0 % sowie mit einem Innendruck kleiner als 10 mbar. Die Daten für die relative Feuchte und den Innendruck wurden bei diesen Wärmedämmkörpern indirekt durch zerstörende Prüfung festgestellt. Die Meßprotokolle 3 und 4 der Wärmedämmkörper 940 und 968 zeigen, welche Ergebnisse Wärmedämmkörper mit geringfügiger Feuchte (2-6 %) und einem Innendruck von ca. (4-10) mbar liefern. Im weiteren folgt ein Prüfprotokoll für diese 4 Wärmedämmkörper. Die graphische Auswertung dieser Messung ist in der Figur 3 dargestellt.

**1)**

| Datei | F:\VERGLEIC\PANELX01.DAT |
|---|---|
| Panelbez | 82/0.1 |
| Chargenbez | 1 |
| Datum | 18.05.1993 |
| Uhrzeit | 09:52 Uhr |
| Meßplatz | Testaufbau |
| Sensor | HEIM. KT15 |
| Prüfer | Elke Berlemann |
| Kommentar | Innendruck d. Panels: < 3 mbar |
| **Prüfbedingungen** | |
| Umgebungstemperatur | 20.9 °C |
| Anfangstemperatur | 23.4 °C |
| **Berechnete Werte** | |
| Erwärmt um | 43.2 °C |
| Abgekühlt um | 37.0 °C |
| Exponent | -2.017E-02 |
| Absolute Abweichung | 9.898E-03 °C |
| Beurteilung | Fehlerfrei |

**2)**

| Datei | F:\VERGLEIC\PANELEX02.DAT |
|---|---|
| Panelbez | 82/1.5 |
| Chargenbez | 1 |
| Datum | 18.05.1993 |
| Uhrzeit | 10:27 Uhr |
| Meßplatz | Testaufbau |
| Sensor | HEIM. KT15 |
| Prüfer | Elke Berlemann |
| Kommentar | Innendruck d. Panels: 5 mbar |
| **Prüfbedingungen** | |
| Umgebungstemperatur | 21.5 °C |
| Anfangstemperatur | 23.7 °C |
| **Berechnete Werte** | |
| Erwärmt um | 42.7 °C |
| Abgekühlt um | 35.6 °C |
| Exponent | -2.083E-02 |
| Absolute Abweichung | 9.025E-02 °C |
| Beurteilung | Fehlerfrei |

**3)**

| Datei | F:\VERGLEIC\PANELX03.DAT |
|---|---|
| Panelbez | 940 |
| Chargenbez | 9 |
| Datum | 03.03.1993 |
| Uhrzeit | 09:39 Uhr |
| Meßplatz | Testaufbau |
| Sensor | HEIM. KT15 |
| Prüfer | Elke Berlemann |
| Kommentar | Innendruck ca. 4mbar, Feuchte 2% |

| Prüfbedingungen | |
|---|---|
| Umgebungstemperatur | 21.0 °C |
| Anfangstemperatur | 22.1 °C |

| Berechnete Werte | |
|---|---|
| Erwärmt um | 42.3 °C |
| Abgekühlt um | 32.8 °C |
| Exponent | -2.448E-02 |
| Absolute Abweichung | 6.271E-02 °C |
| Beurteilung | Ausschuß |

**4)**

| Datei | F:\VERGLEIC\PANELX04.DAT |
|---|---|
| Panelbez | 968 |
| Chargenbez | 10 |
| Datum | 03.03.1993 |
| Uhrzeit | 10:43 Uhr |
| Meßplatz | Testaufbau |
| Sensor | HEIM. KT15 |
| Prüfer | Elke Berlemann |
| Kommentar | Innendruck ca. 11mbar, Feuchte 6% |

| Prüfbedingungen | |
|---|---|
| Umgebungstemperatur | 21.3 °C |
| Anfangstemperatur | 22.5 °C |

| Berechnete Werte | |
|---|---|
| Erwärmt um | 37.1 °C |
| Abgekühlt um | 27.1 °C |
| Exponent | -2.845E-02 |
| Absolute Abweichung | 1.193E-01 °C |
| Beurteilung | Ausschuß |

> Protokoll der Prüflinge die nicht in der
> Spezifikation liegen, oder bei denen eine
> Fehlmessung vorliegt.

Toleranzbereiche der Spezifikation:

```
Erwärmung ......:  42.4 - 43.3 °C
Abkühlung ......:  34.5 - 35.5 °C
Betrag Exponent :  2.07E-02 -  2.14E-02
```

Messungen vom ...: 18.05.93 bis 03.03.93
Messplatz .......: Testaufbau        Sensor ..: HEIM. KT15

Probenanzahl ....:    4, davon Ausschuß:    2
Prüflinge: 82/0.1    , 82/1.5    , 940        , 968

| Spez. | Datum | Bezeichn. | Umgeb. | Anfang | Erwärm. | Abkühl. | Exponent |
|---|---|---|---|---|---|---|---|
| Aussch. | 03.03.93 | 940 | 21.0 | 22.1 | 42.3 | 32.8 | -2.45E-02 |
| Aussch. | 03.03.93 | 968 | 21.3 | 22.5 | 37.1 | 27.1 | -2.84E-02 |

Die automatische Meßwerterfassung mit nachfolgender Auswertung der Daten erfolgt mittels eines Datenverarbeitungsprogramms. Zur Dokumentation und weiterführenden statistischen Untersuchung werden die Meßparameter, die Meßwerte und die Rechenwerte jeder einzelnen Messung in Dateien auf einem dem Rechner zugänglichen Speichermedium festgehalten. Die Auswertung kann über jeden beliebigen Drucker ausgegeben werden. Das Programm ist derart gestaltet, daß nach kurzer Einführung eine einfache Bedienung gegeben ist.

Die Berechnung der Abkühlkurve nach Gleichung (7) erfolgt aus den vorgaben der Messung wie folgt:

Meßwerte:
- o n-Meßwerte (n>100)
- o Anfangstemperatur
- o Zeit zwischen zwei Messungen

Die zu berechnenden Werte sind:
- o Temperatur nach der Erwärmung ($\theta_o$)
- o Exponent der Funktion (k)
- o Abklingtemperatur ($\theta_u$)

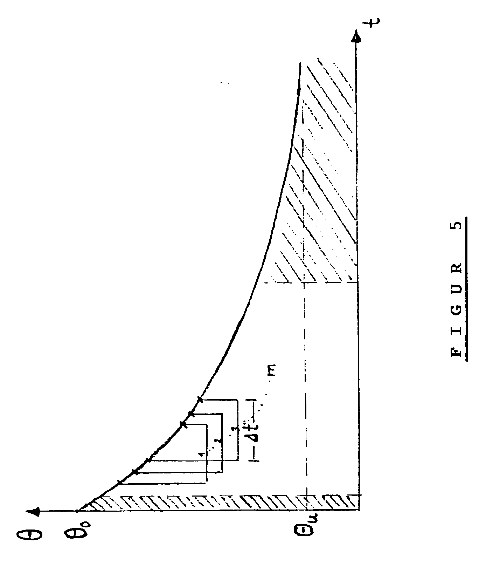

Die Figur 5 verdeutlicht den Iterationsvorgang. Von dem gesamten Kurvenverlauf ist nur der nicht schraffierte Teil bekannt. Unter Vorgabe eines Zeitbereichs ($\Delta t$) werden die Funktionsparameter wie nachfolgend beschrieben berechnet:

1. Anfangstemperatur ist $\theta_u$.
2. Berechnung von k und $\theta_o$ aus den Werten für $\theta(t_1)$ und $\theta(t_2)$ mit $t_2 - t_1 = \Delta t$ (siehe Beispielsrechnung auf Seite 9).
3. m-fache Wiederholung von Punkt 2.
4. Bildung des Mittelwerts aus den m-Werten für k und $\theta_o$.
5. Kontrolle der Abweichung der Einzelwerte k; vom Mittelwert, gegebenenfalls "Ausreißer" eliminieren.
6. Berechnung der Kurve nach Gleichung (7).
7. Berechnung der Abweichung vom Kurvenvorlauf.
8. Falls der Grenzwert der Abweichung überschritten ist, folgt Änderung des Vorgabeparameters $\theta_u$ und der Ablauf beginnt wieder an Punkt 2. Andernfalls wird die Berechnung akzeptiert.

**Patentansprüche**

1.  Verfahren zum Prüfen der Wärmedämmwirkung von Körpern, insbesondere von Wärmedämmkörpern, dadurch gekennzeichnet, daß man an den Körpern, insbesondere den Wärmedämmkörpern, das thermische Relaxationsverhalten mittels berührungsloser Temperaturmessung bestimmt.

# Anordnung während der Erwärmung

Ablauf

Zufuhr

Kühlwasser

3

Heizstrahler

Wärmedämmformkörper

Fenster

Lüfter

Pyrometer

5

2

6

7

Doppelwandiges Aluminiumgehäuse

4

1

F I G U R  1

EP 0 652 434 A2

# Anordnung während der Messung

Abfuhr der Wärme vom Heizstrahler

5

Wärmestrahlung

6

Umschaltung durch 90° Drehung

Warmluft aus dem Gehäuse

4

2

7

3

1

erwärmter Wärmedämmformkörper

EP 0 652 434 A2

FIGUR 2

Temp./°C Y-Linie1  Y-Linie2  Y-Linie3  Y-Linie4

82/0.1
18.05.1993
82/1.5
18.05.1993
940
03.03.1993
968
03.03.1993

Ymin:    10.0°C
Ymax:    50.0°C
Xmin:    .0 Pkt.
Xmax:    512.0 Pkt.

Darstellung der Messungen an den vier geprüften Panels.
Temperaturverlauf reduziert um die Anfangstemperatur d. P.
Linie1: 82/0.1; Linie2: 82/1.5; Linie3: 940; Linie4: 968

F I G U R   3

**F I G U R  4**

F I G U R   5